# EUROPÄISCHE PATENTSCHRIFT

(11) **EP 2 713 348 B1**
(45) Veröffentlichungstag und Bekanntmachung des Hinweises auf die Patenterteilung: **20.05.2015**
(21) Anmeldenummer: 13004594.1
(22) Anmeldetag: 20.09.2013
(51) Int. Cl.: G08B 25/14, H02G 3/08

(54) **Gefahrenmelderzentrale mit gekapselter Elektronik**
Danger warning centre with encapsulated electronics
Centrale de signalisation de danger dotée d'une électronique encapsulée

(30) Priorität: 28.09.2012 DE 102012019067
(43) Veröffentlichungstag der Anmeldung: 02.04.2014
(73) Patentinhaber: ABB AG, 68309 Mannheim (DE)
(72) Erfinder: Heilig, Peter, 69121 Heidelberg (DE); Schmitz, Gerrald, 69250 Schönau (DE); Wilhelm, Michael, 65388 Schlangenbad (DE); Kohl, Bernhard, 69250 Schönau (DE); Krambs, Markus, 69123 Heidelberg (DE); Hess, Michael, 69181 Leimen (DE); Haberer, Dennis, 69123 Heidelberg (DE)

(56) Entgegenhaltungen:
- US-A- 5 545 847
- US-B1- 7 375 646
- "FC726 Fire control panel", Building Technologies CPS Fire Safety & Security products, 1. Januar 2010 (2010-01-01), Seiten 1-8, XP055098673, Zug, Switzerland Gefunden im Internet: URL:http://www.hqs.sbt.siemens.com/gip/gen eral/dlc/data/assets/hq/Fire-control-panel -FS720-series--IP4-_A6V10303108_hq-en.pdf [gefunden am 2014-01-27]

## Beschreibung

Die Erfindung betrifft eine Gefahrenmelderzentrale mit einer Gehäuseabdeckung, mit einem Wandgehäuse, welches ausgebildet ist mit einer Grundplatte, mit einer eine Grundleiterplatte umfassenden Elektronikeinheit, die an der Grundplatte befestigt ist, gemäß dem Oberbegriff des Anspruchs 1.

Eine Gefahrenmelderzentrale ist ein zentraler Teil einer Gefahrenmeldeanlage. Gefahrenmeldeanlagen, wie beispielsweise Einbruch- und Brandmeldeanlagen, sind Systeme, die in der Regel eine solche Gefahrenmelderzentrale , sowie an diese Zentrale angeschlossene Melder, auch als Verbraucher oder als Module bezeichnet, umfassen. Beispiele für solche Melder oder Module sind Einbruchmelder, Brandmelder, etc. Die örtlich von der Zentrale abgesetzten Melder sind informationstechnisch an die Zentrale angeschlossen. Das kann über eine mehradrige Leitung oder über eine Funkstrecke realisiert sein. Die Energieversorgung der Melder kann dabei von der Zentrale unabhängig, etwa über den Meldern zugeordnete Batterien oder Netzstromversorgungen, realisiert sein. Sie kann auch von der Zentrale her über eine mehradrige Leitung erfolgen.

Die DE 44 18 978 C2 zeigt ein Wandgehäuse für eine Gefahrenmelderzentrale, bestehend aus einer an der Wand mittels Schrauben befestigbaren Grundplatte und einer Schutzkappe, wobei die Grundplatte in ihrem oberen Bereich eine Verdrahtungsleiterplatte aufweist. Um die Schutzkappe auf der Grundplatte zu halten, ist die Verdrahtungsleiterplatte an ihrer Oberseite mit einem Reedkontakt versehen, welcher im aufgesetzten Zustand der Schutzkappe auf der Grundplatte durch einen an der Schutzkappe entsprechend angebrachten Dauermagneten geschlossen gehalten wird. Bei Inbetriebnahme und Wartung, wenn die Schutzkappe entfernt oder geöffnet werden muss, ist die Elektronik auf der Grundplatte frei zugänglich, sie kann dann durch unsachgemäßen Umgang beschädigt werden. Die Verdrahtung der Elektronik auf der Grundplatte der Gefahrenmelderzentrale erweist sich als aufwändig und ist ohne eine zusätzliche Montage- bzw. Betriebsanleitung nicht möglich.

Es ist die Aufgabe der vorliegenden Erfindung, eine Gefahrenmelderzentrale zu schaffen, bei der mit einfachen Mitteln eine vereinfachte Montage möglich ist, und bei der die Gefahr der Beschädigung der Verdrahtung und der Elektronikbauteile verringert ist.

Die Aufgabe wird gelöst durch eine Gefahrenmelderzentrale mit den Merkmalen des Anspruchs 1.

Erfindungsgemäß also weist die Elektronikeinheit eine Elektronikabdeckung auf, die die Grundleiterplatte sowohl vorder- als auch rückseitig abdeckt, und wobei die der Grundplatte zugewandte Seite der Elektronikabdeckung von der Grundplatte beabstandet ist, so dass ein freier Raum zum Durchführen von Kabeln zwischen der Grundplatte und der Elektronikabdeckung gebildet ist. Die Elektronikabdeckung ist dadurch als ein komplett, rundum gekapseltes Modul ausgeführt. Die Verkabelung der Gefahrenmelderzentrale ist aufgrund der Beabstandung des gekapselten Moduls der Elektronikeinheit von der Grundplatte vereinfacht und für den Monteur erleichtert.

Aufgrund der vollständigen Kapselung, der Ausbildung der Elektronikeinheit als komplett gekapseltes Modul und dessen Beabstandung von der Grundplatte wird es für den Installateur einfacher, normgerechte Isolationsabstände bei der Verkabelung der Gefahrenmelderzentrale einzuhalten. Wenn Kabel in dem Raum zwischen der Grundplatte und der Elektronikeinheit verlegt werden, dann ermöglicht die vollständige Kapselung der Elektronikeinheit das Einhalten der Isolationsabstände zwischen den stromführenden Kabeln und strom- bzw. spannungsführenden Teilen der Elektronikeinheit.

Die erfindungsgemäß vorgesehene Elektronikabdeckung schützt die Elektronik der Elektronikeinheit vor Verschmutzung und Beschädigung, wenn die Gehäuseabdeckung geöffnet werden muss. Es ist auch ein Schutz der Elektronik vor statischen Entladungen damit erreichbar. Die Frontseite der Elektronikabdeckung stellt Raum bereit zum Aufbringen einer detaillierten Beschriftung aller Anschlüsse sowie gegebenenfalls einer Abbildung des Schaltschemas und wichtiger Angaben zur Montage und Inbetriebnahme.

Gemäß einer vorteilhaften Ausführungsform der Erfindung ist in der Elektronikeinheit ein durch die Elektronikabdeckung hindurch betätigbarer Gehäuseabdeckungsabhebekontaktgeber eingebaut, und an der Gehäuseabdeckung ist ein Betätigungsmittel vorgesehen, wobei der Gehäuseabdeckungsabhebekontaktgeber unterhalb der Gehäuseabdeckung in dem Wirkbereich des Betätigungsmittels angeordnet ist, so dass bei vollständig aufgesetzter Gehäuseabdeckung der Gehäuseabdeckungsabhebekontaktgeber betätigt ist.

Der erfindungsgemäß in der Elektronikeinheit durch die Elektronikabdeckung hindurch betätigbare Gehäuseabdeckungsabhebekontaktgeber hat mehrere Vorteile. So kann er nicht oder nur sehr schwer von außen manipuliert werden. Weiterhin ist durch die Führung der Gehäuseabdeckung in vertikaler Richtung zur Grundplatte der Gehäuseabdeckungsabhebekontaktgeber nur im vollständig geschlossenen Zustand des Gehäuses betätigt, jede kleine Manipulation an der Gehäuseabdeckung führt zu einer Zustandsänderung des Gehäuseabdeckungsabhebekontaktgebers, wodurch eine solche Manipulation an dem Gerät selbst oder an einer entfernt liegenden Überwachungsstation, die gegebenenfalls bei einem Wachunternehmen lokalisiert ist, angezeigt werden kann.

Der Gehäuseabdeckungsabhebekontaktgeber kann gemäß einer vorteilhaften Ausführungsform durch einen Mikroschalter gebildet sein.

Gemäß einer vorteilhaften Ausführungsform der Erfindung ist die Gefahrenmelderzentrale mit einem Wandabhebekontaktgeber versehen und die Grundplatte ist mit einer für eine veränderliche Einstellung des Abstandes zwischen der Grundplatte und dem Wandabhebekontaktgeber eingerichteten Halterungsvorrichtung für den Wandabhebekontaktgeber ausgebildet, wobei der Wandabhebekontaktgeber an der Halterungsvorrichtung längsverschieblich in Richtung zwischen der Grundplatte und der Wand gehalten ist.

Der Vorteil der erfindungsgemäß für eine veränderliche Einstellung des Abstandes zwischen der Grundplatte und dem Wandabhebekontaktgeber eingerichteten Halterungsvorrichtung für den Wandabhebekontaktgeber mit dem an der Halterungsvorrichtung längsverschieblich in Richtung zwischen der Grundplatte und der Wand gehaltenen Wandabhebekontaktgeber besteht darin, dass Unebenheiten der Wandfläche bei der Wandmontage der Gefahrenmelderzentrale hinsichtlich des Wirkabstandes zwischen dem Wandabhebekontaktgeber und der Wand einfach ausgeglichen werden können.

Gemäß einer vorteilhaften Ausführungsform der Erfindung ist der Wandabhebekontaktgeber durch einen Mikroschalter gebildet.

Gemäß einer vorteilhaften Ausführungsform der Erfindung ist die Halterungsvorrichtung für den Wandabhebekontaktgeber durch eine durch Schlitze in der Grundplatte gebildete und senkrecht zur Grundplatte umgebogene Lasche und durch eine auf der Lasche senkrecht zur Grundplatte verschiebliche und an der Lasche befestigbare Schiene gebildet, wobei an dem freiem Ende der Schiene der Wandabhebekontaktgeber befestigbar ist. Die Schiene ist durch die verschiebliche Befestigung an der Lasche gewissermaßen schlittenartig verstellbar, wodurch Unebenheiten der Wand, an der die Gefahrenmelderzentrale montiert wird, bezüglich des Anlenkpunktes des Wandabhebekontaktgebers einfach ausgeglichen werden können.

Um den Gehäuseabdeckungsabhebekontaktgeber zuverlässig zu betätigen, und zwar dann und nur dann, wenn das Gehäuse vollständig geschlossen ist, ist gemäß einer vorteilhaften Ausführungsform vorgesehen, dass die Gehäuseabdeckung an ihrer Innenseite mit einem ins Innere der Gehäuseabdeckung weisenden Betätigungsmittel für den Gehäuseabdeckungsabhebekontaktgeber versehen ist. Wenn der Gehäuseabdeckungskontaktgeber nicht betätigt ist, ist das dann ein Indiz dafür, dass die Gehäuseabdeckung unerlaubt entfernt oder auf andere Art und Weise manipuliert wurde, und es wird entweder ein Alarm ausgelöst oder eine entsprechende Meldung abgesetzt.

Gemäß einer vorteilhaften Ausführungsform der Erfindung ist das Betätigungsmittel ein ins Innere der Gehäuseabdeckung weisender Steg. Dieser kann gemäß einer vorteilhaften Ausführungsform als eine V-Kontur ausgebildet sein, deren beide Längsschenkel an der Innenseite der Gehäuseabdeckung befestigt sind, und die an ihren freien Enden aufeinander zu laufen und dort mit einer Betätigungsfläche verbunden sind.

Gemäß einer vorteilhaften Ausführungsform der Erfindung ist das Betätigungsmittel eine an der Schmalseite der Gehäuseabdeckung angebrachte, nach innen in den Innenraum hin abstehende, Lasche, deren eine Seite eine Betätigungsfläche bildet.

Gemäß einer vorteilhaften Ausführungsform kann die Elektronikeinheit mit einer auf der Grundleiterplatte ausgebildeten KNX-Busschnittstelle und einer KNX-Busklemme versehen sein. Damit kann in vorteilhafter Weise eine Gefahrenmelderzentrale mit integrierter KNX-Schnittstelle realisiert sein. Die erfindungsgemäße Gefahrenmelderzentrale kann dann so ausgebildet sein, dass sie der Norm EN 50131 Grad 3 und der VdS-Klasse C genügt. In einer solchen vorteilhaften erfindungsgemäßen Gefahrenmelderzentrale ist für die KNX-Anbindung kein zusätzliches Gerät und keine zusätzliche Verdrahtung erforderlich. Es wird auf einfache Weise eine KNX-fähige Gefahrenmelderzentrale geschaffen, die sowohl die Norm der Einbruch- und Überfallmeldeanlagen als auch für KNX Systeme erfüllt.

Gemäß einer vorteilhaften Ausführungsform der Erfindung ist die Elektronikeinheit mit einem Web-Server und einem Web-User-Interface ausgebildet. Dazu ist die Elektronikeinheit vorteilhaft mit wenigstens einem Mikroprozessor ausgebildet.

In einer weiteren vorteilhaften Ausführungsform der Erfindung ist die Elektronikeinheit mit einer Speicherkartenschreib/lesevorrichtung ausgebildet, beispielsweise einem SD-Karten-Schreib/lesegerät. Entsprechend befindet sich in der Elektronikabdeckung ein SD-Karten-Slot, nämlich ein Schlitz, um die SD-Speicherkarte dem SD-Karten-Schreib/lesegerät zuzuführen.

Mithilfe des SD-Karten-Schreib/lesegerätes können beispielsweise Bilder von Netzwerkkameras, Produktdokumentationen und sonstige Dokumente in der Gefahrenmelderzentrale gespeichert werden.

Mithilfe des SD-Karten-Schreib/lesegerätes können die Software und/oder Parameter der Gefahrenmelderzentrale aktualisiert und/oder angepasst werden, ohne dass zusätzliche Hilfsmittel, wie beispielsweise ein externer Personalcomputer oder eine spezielle Parametrier-Software, benötigt werden. Die zu aktualisierende Software oder die zu aktualisierenden Parameter werden über eine Speicherkarte und über das SD-Karten-Schreib/lesegerät der Gefahrenmelderzentrale übermittelt.

Zusätzlich kann die KNX-Firmware intern über einen zentralen Mikroprozessorprozessor aktualisiert werden.

Ein weiterer Vorteil besteht darin, dass Parameter der an die Zentrale angeschlossenen Busteilnehmer, beispielsweise von Busbewegungsmeldern, einzeln durch ein integriertes Web User Interface bearbeitet und in die Teilnehmer hin übertragen werden.

Ein weiterer Vorteil besteht darin, dass Sprachmeldungen nicht über Wave-Dateien geladen werden müssen, sondern sie können aus Textdateien, die über das integrierte Web User Interface individuell erstellt werden können, in Sprachmeldungen umgewandelt werden.

Ein weiterer Vorteil besteht darin, dass über das Web User Interface automatisierte Servicefunktionen integriert sein können, die die Wartungsarbeiten vereinfachen.

Ein weiterer Vorteil besteht darin, dass über das Web User Interface Diagnosefunktionen integriert sein können, die die Fehlersuche vereinfachen.

Gemäß einer vorteilhaften Ausführungsform der Erfindung ist die Elektronikeinheit mit einer Energieversorgungsvorrichtung ausgebildet, deren Ausgangsspannung vorgesehen ist zur Versorgung der Gefahrenmelderzentrale selbst und zur Versorgung von wenigstens einem an die Gefahrenmelderzentrale angeschlossenen, von der Gefahrenmelderzentrale örtlich abgesetzten Modul mit elektrischer Energie, wobei die Energieversorgungsvorrichtung mit einer Netzstromversorgung und mit Akkumulatoren zur Notstromversorgung bei Netzausfall ausgebildet ist, und mit einer Spannungsstabilisierungsschaltung zur Stabilisierung der Ausgangsspannung auch bei Nachlassen der Akkumulatorspannung.

Die Spannungsstabilisierungsschaltung stellt sicher, dass auch bei Nachlassen der Akkumulatorspannung im Laufe der Zeit der Notstromversorgung die Ausgangsspannung stabilisiert bleibt. Die Ausgangsspannung kann also aufgrund der vorliegenden Erfindung im Notstrombetrieb nicht mehr unbemerkt auf einen zu geringen Wert absinken, bei dem dann der Betrieb des angeschlossenen Moduls, also beispielsweise eines Einbruchsmelders, nicht mehr sichergestellt und damit eine zuverlässige Alarmauslösung nicht mehr gegeben wäre.

Gemäß einer vorteilhaften Ausführungsform der Erfindung umfasst die Elektronikeinheit ein elektronisches Überwachungsmodul zur Überwachung der Akkumulatorspannung, wobei das Überwachungsmodul dazu eingerichtet ist, um bei Unterschreiten einer vorgebbaren Entladeschlussspannung an den Ausgängen eine Alarmmeldung abzugeben. Gemäß einer vorteilhaften Ausführungsform entspricht die Entladeschlussspannung, bei deren Unterschreiten das Überwachungsmodul die Alarmmeldung erzeugt, der minimalen Eingangsspannung des oder der angeschlossenen Module. Damit ist der Vorteil verbunden, dass der Anlagenbetreiber von der Gefahrenmelderzentrale im Notstromfall automatisch darauf hingewiesen wird, wenn ein sicheres Alarmauslösen nicht mehr möglich ist, auch wenn die mittlere Zeit des normalerweise möglichen Notstrombetriebes noch nicht abgelaufen ist. Der Betreiber kann dann entsprechend reagieren und die Netzstromversorgung wieder herstellen oder einen neuen, geladenen Akkumulator einsetzen.

Gemäß einer vorteilhaften Ausführungsform der Erfindung ist die Spannungsstabilisierungsschaltung dazu eingerichtet ist, um die Ausgangsspannung auf einen Wert zu stabilisieren, der größer ist als die minimale Eingangsspannung des oder der angeschlossenen Module. Damit ist es möglich, die Verbindungsleitungen zu den angeschlossenen Modulen länger zu machen, denn wegen der höheren stabilisierten Ausgangsspannung kann auch ein erhöhter Leitungswiderstand aufgrund einer größeren Leitungslänge und ein damit einher gehender größerer Spannungsabfall auf der Anschlussleitung nicht zu einem Unterschreiten der minimal erforderlichen Betriebsspannung des oder der angeschlossenen Module führen.

Beispielsweise kann die Ausgangsspannung durch ein stabilisiertes Schaltnetzteil auf beispielsweise einen Wert von 13,2 V stabilisiert sein, auch im Akkumulatorenbetrieb bei Ausfall der Netzspannung. Dadurch ist eine definierte Ausgangsspannung auch bei sich entladenden Akkus gewährleistet, wodurch größere Leitungslängen bei gleichem Leitungsquerschnitt möglich sind.

In vorteilhafter Ausführungsform kann damit ein komplettes Weitbereichsnetzteil auf der Grundleiterplatte integriert sein. Es ist damit keine Verdrahtung zu der Elektronik von einem separaten Netzteil aus erforderlich.

Gemäß einer vorteilhaften Ausführungsform der Erfindung weist die Elektronikeinheit mit Anschlussklemmen versehene Ausgänge zum Anschluss von Verbindungskabeln zu dem wenigstens einen von der Gefahrenmelderzentrale örtlich abgesetzten Modul auf. Dazu kann die Elektronikeinheit eine Anordnung von Kabelanschlussklemmen umfassen, die an der Elektronik-Abdeckung angebracht sind.

Gemäß einer vorteilhaften Ausführung der Erfindung sind die Ausgänge mit einer Strombegrenzung versehen. Die Strombegrenzung ist variabel ausgelegt und kann über das Web User Interface eingestellt werden. Es sind dadurch keine Feinsicherungen notwendig, die nach einem Kurzschluss oder Überlast gewechselt werden müssen.

Weitere vorteilhafte Ausgestaltungen und Verbesserungen der Erfindung und weitere Vorteile sind den Unteransprüchen zu entnehmen.

Anhand der Zeichnungen, in denen ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigt:
- Figur 1: eine Ansicht einer erfindungsgemäßen Gefahrenmelderzentrale bei entfernter Gehäuseabdeckung,
- Figur 2: ein Blockschaltbild der Elektronikeinheit,
- Figur 3: eine Ansicht der Innenseite der Gehäuseabdeckung,
- Figur 3a: eine Ansicht einer weiteren Ausführungsform der Innenseite der Gehäuseabdeckung
- Figur 4: eine Ansicht der Vorderseite der Elektronikabdeckung, sowie
- Figur 5: eine Detailansicht der Halterungsvorrichtung für den Wandabhebekontaktgeber.

Gleiche oder gleichwirkende Elemente oder Bauteile sind mit denselben Bezugszeichen bezeichnet.

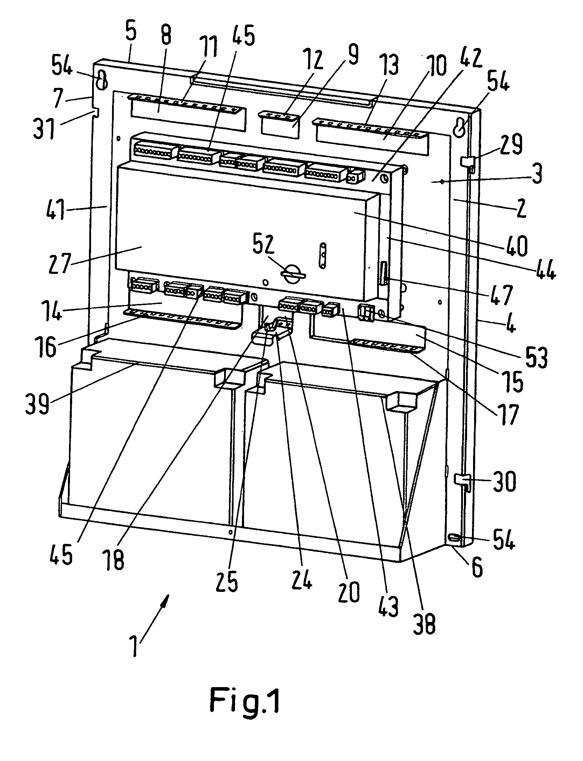

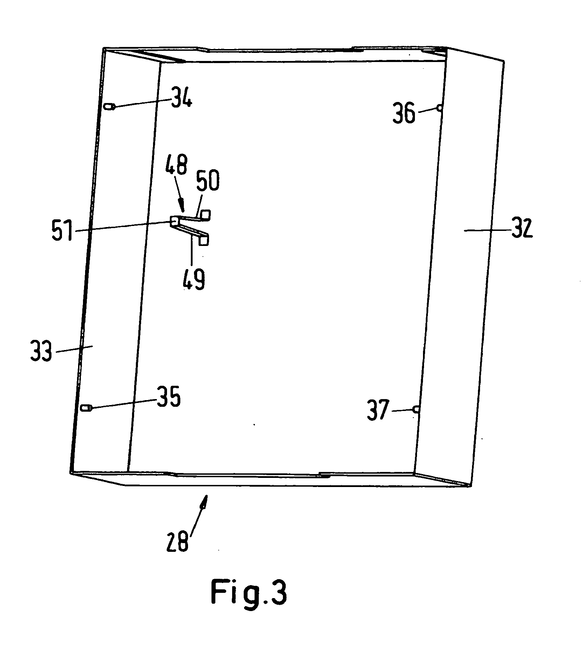

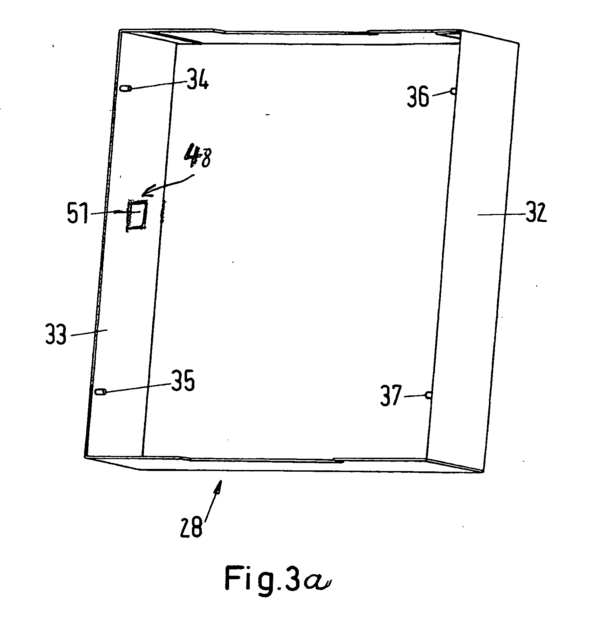

Figur 1 zeigt ein geöffnetes Wandgehäuse 1 für eine Gefahrenmelderzentrale. Man erkennt eine Grundplatte 2, an der eine Elektronikeinheit 27 befestigt ist. In geschlossenem Zustand würde über die Grundplatte 2 mit der Elektronikeinheit 27 eine Gehäuseabdeckung 28 gesetzt. Die Gehäuseabdeckung 28 hat die Form eines an einer Breitseite geöffneten quaderförmigen Kastens, siehe Figur 3, wo eine Einsicht in die Gehäuseabdeckung 28 dargestellt ist.

Die Grundplatte 2 weist einen in einem gewissen Abstand zu der Wand, an der das Wandgehäuse montiert werden soll (die Wand ist in der Figur nicht dargestellt, sie befindet sich in Richtung in die Zeichenebene hinein hinter der Grundplatte 2), befindliche und parallel zu dieser Wand verlaufende Bodenplatte 3 auf. Die rechte und linke Längsseitenwände 4, 7 und die oberen unteren Seitenwände 5, 6, der Grundplatte 2 sind senkrecht zu der Bodenplatte 3 umgebogen und reichen in montiertem Zustand umlaufend bis zu der Wand. Innerhalb der Grundplatte 2 entsteht dadurch auf der der Wand zugewandten Seite ein Hohlraum. Dieser Hohlraum kann zur Kabelführung verwendet werden, wenn die Kabel im Bereich der Grundplatte 2 aus der Wand austreten.

Im oberen und unteren Bereich der beiden Längsseitenwände 4, 7 befinden sich Aufnahmeöffnungen 29, 30, 31 (eine vierte Aufnahmeöffnung ist unten links vorhanden aber nicht sichtbar). An der Innenseite der Längsseitenwände 32, 33 der Gehäuseabdeckung 28 ragen Stifte 34, 35, 36, 37 in den Innenraum. Beim Montieren der Gehäuseabdeckung 28 auf der Grundplatte 2 greifen diese Stifte 34, 35, 36, 37 in die Aufnahmeöffnungen 29, 30, 31 ein und arretieren die Gehäuseabdeckung 28 an der gewünschten Position.

Die Grundplatte 2 weist in ihrem oberen Bereich, nahe der oberen Seitenwand 5, drei obere Kabelöffnungen 8, 9, 10 auf. Diese sind als rechteckförmige, längserstreckte schlitzartige Ausnehmungen ausgebildet. An ihrer oberen Kante ist an jeder der oberen Kabelöffnungen eine senkrecht zu der Bodenplatte nach außen umgebogene Lasche 11, 12, 13 ausgebildet, welche Haltelöcher zur haltenden Aufnahme von Kabeln aufweisen.

Die Grundplatte 2 weist in ihrem mittleren Bereich zwei mittlere Kabelöffnungen 14, 15 auf. Auch diese sind als rechteckförmige, längserstreckte schlitzartige Ausnehmungen ausgebildet. An ihrer unteren Kante ist an jeder der mittleren Kabelöffnungen 14, 15 eine senkrecht zu der Bodenplatte nach außen umgebogene Lasche 16,17 ausgebildet, welche ebenfalls Haltelöcher zur haltenden Aufnahme von Kabeln aufweisen.

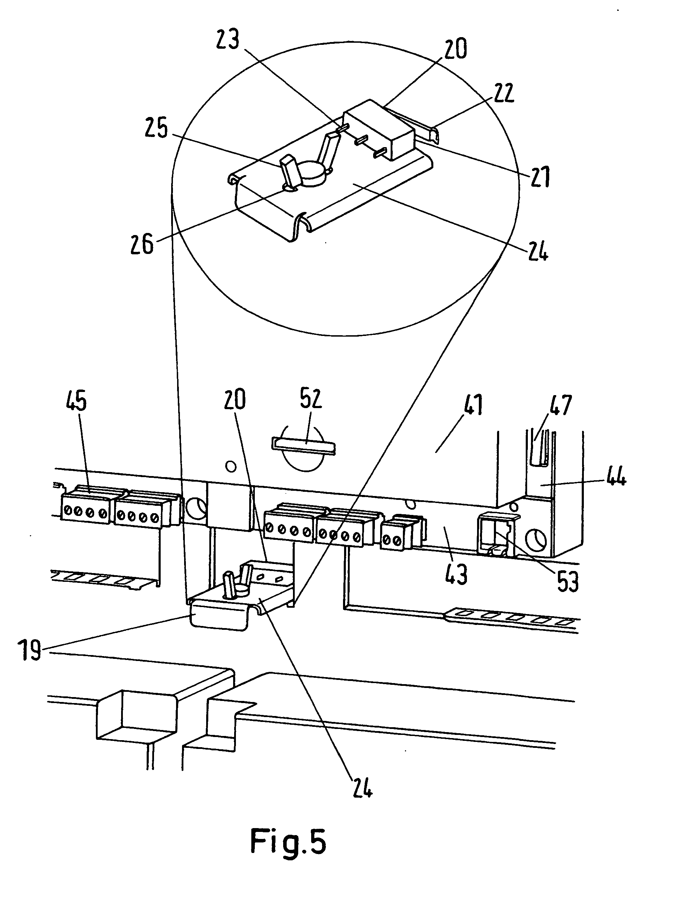

Zwischen den beiden mittleren Kabelöffnungen 14, 15 befindet sich eine weitere Öffnung 18. Die Öffnung 18 ist dadurch entstanden, dass durch parallele Schlitze in der Grundplatte 2 eine Lasche 19 gebildet wurde, und die Lasche 19 wurde senkrecht zu der Grundplatte 2 nach innen umgebogen. Die Lasche 19 bildet einen Teil der Halterungsvorrichtung für den Wandabhebekontaktgeber 20, einen Mikroschalter, siehe auch Figur 5.

Der Wandabhebekontaktgeber 20 ist mit einem Gehäuse 21, einem Betätigungshebel 22 und Anschlussstiften 23 ausgebildet. In dem Gehäuse befindet sich der Kontaktapparat, der durch den Betätigungshebel 22 in verschiedene Schaltstellungen gebracht werden kann. Zweck des Wandabhebekontaktgebers 20 ist es, bei unbefugtem Entfernen des Wandgehäuses von der Wand eine Meldung auszulösen. Dazu ist der Wandabhebekontaktgeber 20 so angebracht, dass, wenn das Wandgehäuse 1 an der Wand befestigt ist, der Betätigungshebel 22 von der Wand gegen das Gehäuse gedrückt wird, was den Kontaktapparat im Inneren des Gehäuses in einen ersten Schaltzustand versetzt. Wenn das Wandgehäuse 1 von der Wand abgenommen würde, würde der Betätigungshebel 22 in seine Ruhestellung, von dem Gehäuse gewissermaßen weggeklappt, übergehen, wodurch der Kontaktapparat im Inneren des Gehäuses in einen zweiten Schaltzustand übergehen würde. An die Anschlussstifte 23 sind elektrische Signalleitungen angeschlossen, die den jeweiligen Schaltzustand des Kontaktapparates an eine Auswerte- und Signaleinheit weitergeben. Diese Auswerte- und Signaleinheit ist hier Teil der Elektronik-Einheit 27 und auf der Grundleiterplatte der Elektronik-Einheit 27 integriert.

Somit kann durch den Wandabhebeschalter ein Abnehmen der Gefahrenmelderzentrale bzw. des Wandgehäuses 1 von der Wand erkannt und weitergemeldet werden. Meistens ist es Sinn und Zweck des Wandabhebeschalters, ein unbefugtes Abnehmen des Wandgehäuses zu erkennen und zu melden. Der Wandabhebeschalter wird daher auch als Sabotagekontakt bezeichnet. Eine Gefahrenmelderzentrale kann bekanntlich in einen ersten Betriebszustand "Scharf" und einen zweiten Betriebszustand "Unscharf" geschaltet sein. Die Gefahrenmelderzentrale kann dabei so eingerichtet sein, dass ein Abnehmen der Gefahrenmelderzentrale bzw. des Wandgehäuses von der Wand einen Sabotagealarm auslöst.

Wenn die Wand Unebenheiten aufweist, könnte es vorkommen, dass der Betätigungshebel beim Anbringen des Wandgehäuses an der Wand auf eine Mulde in der Wand trifft und daher nicht weit genug gegen das Gehäuse 21 gedrückt wird, so dass trotz an der Wand befestigtem Wandgehäuse 1 der Wandabhebekontaktgeber 20 den Zustand des von der Wand entfernten Gehäuses anzeigt. Um einen Ausgleich des Wirkabstandes des Wandabhebekontaktgebers 1 von der Wand bei vorhandenen Unebenheiten vornehmen zu können, ist dieser auf dem einen Ende einer rechteckigen Schiene 24 befestigt. Die Schiene 24 hat in ihrer Mitte ein in Längserstreckungsrichtung der Schiene orientiertes Langloch 26. Die Schiene 24 ist an der Lasche 19 verschieblich befestigt. Dazu hat die Lasche 19 eine Bohrung mit einem Schraubgewinde. Mit einer Flügelschraube 25, deren Schaft durch das Langloch 26 greift, ist die Schiene 24 auf der Lasche 19 festgeschraubt. Wegen des Langloches kann die Schiene 24 vor dem Arretieren mehr oder weniger weit aus der Grundplatte 2 herausgeschoben werden, somit ist der Abstand des Endes der Schiene 24 und damit des Wandabhebekontaktgebers 20 an Unebenheiten der Wand einfach anpassbar. Der Wandabhebekontaktgeber ist also an der Halterungsvorrichtung längsverschieblich in Richtung zwischen der Grundplatte und der Wand gehalten.

Im unteren Bereich der Grundplatte 2 sind zwei Aufnahmetaschen 38, 39 ausgebildet, zur Aufnahme von Akkumulatoren zur Notstromversorgung der Elektronik-Einheit bei Netzausfall.

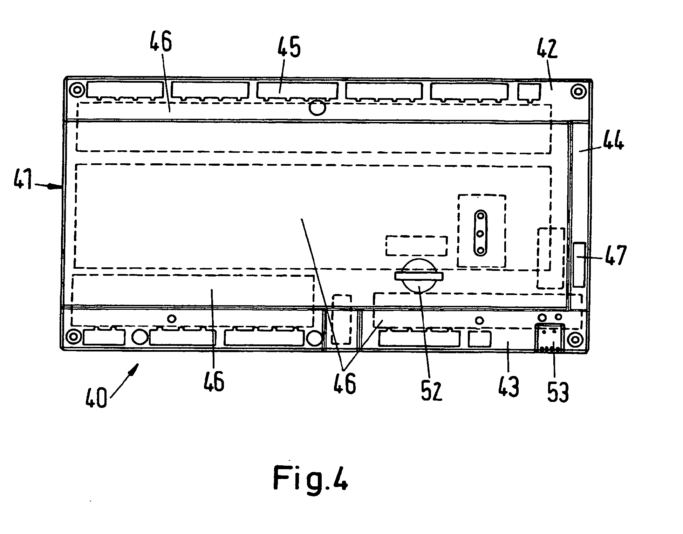

Im Bereich zwischen den oberen Kabelöffnungen 8, 9, 10 und den mittlere Kabelöffnungen 14, 15 ist an der Grundplatte 2 eine Elektronik-Einheit 27 befestigt. Diese umfasst eine Grundleiterplatte, hier nicht sichtbar, die von einer Elektronikabdeckung 40 abgedeckt ist. Die Elektronikabdeckung 40 hat einen zentralen, von der Grundplatte 2 nach vorne wegstehenden Mittelteil 41 und zu der Grundplatte 2 hin zurück versetzte obere, untere und seitliche Randbereiche 42, 43, 44. Die Figur 4 zeigt eine Frontalansicht auf die Elektronikabdeckung 40.

Die gesamte Elektronik der Gefahrenmelderzentrale befindet sich unterhalb der Elektronikabdeckung 40, auf der Grundleiterplatte. Dabei ist der Begriff Grundleiterplatte so zu verstehen, dass es sich entweder um eine einzige Leiterplatte handeln kann, auf der die unterschiedlichen Bauteile der unterschiedlichen Funktionsblöcke angebracht und angeordnet sind, oder dass es sich um mehrere, physikalisch voneinander getrennte Teilleiterplatten handelt, die aber funktional zusammengeschaltet sind.

Durch die Elektronikabdeckung 40 ist die gesamte Elektronik geschützt, wenn die Gehäuseabdeckung 28 abgenommen wird. Vorteilhaft ist dies insbesondere bei Inbetriebnahme- oder Wartungsarbeiten an der Gefahrenmelderzentrale. Dann wird die Gehäuseabdeckung 28 abgenommen, um beispielsweise die Verkabelung anzubringen. Ohne den zusätzlichen Schutz durch die Elektronikabdeckung 40 wäre in diesem Zustand auch die Elektronik freiliegend und könnte beschädigt werden, etwa mechanisch während der Verdrahtung oder elektrisch durch elektrostatische Entladung, sog. ESD (Electro Static Discharge).

Die Elektronikabdeckung 40 deckt die Grundleiterplatte 56 sowohl vorder- als auch rückseitig ab. Die Elektronikeinheit 27 ist somit als komplett gekapseltes Modul ausgebildet.

Die der Grundplatte 2 zugewandte Seite der Elektronikabdeckung 40 ist von der Grundplatte 2 beabstandet, so dass ein freier Raum zum Durchführen von Kabeln zwischen der Grundplatte 2 und der Elektronikabdeckung 40 gebildet ist. Dadurch wird die Verkabelung der Gefahrenmelderzentrale vereinfacht.

Aufgrund der vollständigen Kapselung, der Ausbildung der Elektronikeinheit als komplett gekapseltes Modul und dessen Beabstandung von der Grundplatte wird es für den Installateur einfacher, normgerechte Isolationsabstände bei der Verkabelung der Gefahrenmelderzentrale einzuhalten. Wenn Kabel in dem Raum zwischen der Grundplatte und der Elektronikeinheit verlegt werden, dann ermöglicht die vollständige Kapselung der Elektronikeinheit das Einhalten der Isolationsabstände zwischen den stromführenden Kabeln und strom- bzw. spannungsführenden Teilen der Elektronikeinheit.

Außen an den oberen und unteren Randbereichen 42, 43 der Elektronikabdeckung 40 sind Kabelanschlussklemmen 45 angebracht. Es sind dies Reihenklemmen mit Schraubklemmtechnik, es können aber auch andere Klemmenarten, wie beispielsweise schraubenlose Federkraftklemmen, eingesetzt werden. Die Kabelanschlussklemmen 45 sind durch die Elektronikabdeckung 40 hindurch elektrisch mit der Elektronik auf der Grundleiterplatte verbunden. Um Anschlusskabel an die Elektronik anzuschließen, oder um die Anschlussverkabelung zu ändern, braucht man die Elektronikabdeckung nicht zu entfernen, die Elektronik bleibt vollständig bedeckt und geschützt. Die Kabelanschlussklemmen 45 dienen beispielsweise zum Anschließen der Melde- und Versorgungsleitungen zu und von den entfernt angeordneten Modulen der Gefahrenmeldeanlage, beispielsweise zu einem oder mehreren Glasbruchmeldern, einem oder mehreren Brandmeldern, einem oder mehreren Bewegungsmeldern, etc.

An der Vorderseite des Mittelteils 41 der Elektronikabdeckung 40 befinden sich Beschriftungsflächen 46 zum Aufbringen einer detaillierten Beschriftung aller Anschlüsse sowie gegebenenfalls einer Abbildung des Schaltschemas und wichtiger Angaben zur Montage und Inbetriebnahme der Gefahrenmelderzentrale. Damit braucht der Installateur bei der Inbetriebnahme oder der Montage nicht mehr ein separates Dokument zu betrachten, alle hierzu benötigten Informationen und Anweisungen können auf den Beschriftungsflächen 46 angebracht sein.

Auf der Grundleiterplatte befindet sich ein Gehäuseabdeckungsabhebekontaktgeber 47. Der Gehäuseabdeckungsabhebekontaktgeber ist als ein Mikroschalter ausgebildet. Er dient, ähnlich wie der oben beschriebene Wandabhebekontaktgeber 20 auch, als Sabotagekontakt und überwacht das Abnehmen der Gehäuseabdeckung 28 von der Gefahrenmelderzentrale bzw. von dem Wandgehäuse 1.

Dabei ist der Gehäuseabdeckungsabhebekontaktgeber 47 von der Elektronikabdeckung 40 bedeckt und damit geschützt, auch vor Manipulationen von außen. In der Elektronikabdeckung 40 befindet sich im Bereich über dem Gehäuseabdeckungsabhebekontaktgeber 47 eine Ausnehmung, die den Zugang zu dem Betätigungsorgan des Gehäuseabdeckungsabhebekontaktgebers 47 zu dessen Betätigung ermöglicht. Der Gehäuseabdeckungsabhebekontaktgeber 47 ist auf der Grundleiterplatte, unten am seitlichen Randbereich 44, angebracht.

Innen an der Vorderseite der Gehäuseabdeckung 28 ist ein Betätigungsmittel 48 für den Gehäuseabdeckungsabhebekontaktgeber 47 angebracht. In der Ausführungsform nach Figur 3 ist das Betätigungsmittel ein Steg 48. Der Steg 48 weist von der Vorderseite der Gehäuseabdeckung weg in das Innere der Gehäuseabdeckung 28. Er ist hier als eine V-Kontur ausgebildet, deren beide Längsschenkel 49, 50 an der Innenseite der Gehäuseabdeckung 28 befestigt sind, und die an ihren freien Enden aufeinander zu laufen und dort mit einer Betätigungsfläche 51 verbunden sind.

In der Ausführungsform nach Figur 3a ist das Betätigungsmittel 48 eine an der Schmalseite der Gehäuseabdeckung angebrachte, nach innen in den Innenraum hin abstehende, Lasche, deren eine Seite die Betätigungsfläche 51 bildet.

Die Position und die Höhe des Steges 48 sind so bemessen, dass, wenn die Gehäuseabdeckung 28 vollständig geschlossen auf dem Wandgehäuse aufgebracht ist, die Betätigungsfläche 51 des Betätigungsmittels 48, also beispielsweise des Steges 48 oder der Lasche, das Betätigungsorgan des Gehäuseabdeckungsabhebekontaktgebers 47 so betätigt, dass der Gehäuseabdeckungsabhebekontaktgeber 47 in seiner ersten Schaltkonfiguration gehalten ist. Wenn die Gehäuseabdeckung 28 entfernt wird, so gibt das Betätigungsmittel 48, also beispielsweise der Steg 48 oder die Lasche, das Betätigungsorgan des Gehäuseabdeckungsabhebekontaktgebers 47 frei, und dieser geht in seine zweite Schaltkonfiguration über. Dabei wird ein Sabotagealarm ausgelöst.

Die Gehäuseabdeckung 28 ist so ausgeführt, dass durch die Führung der Gehäuseabdeckung 28 in vertikaler Richtung auf die Grundplatte 2 zu der Gehäuseabdeckungsabhebekontaktgeber 47 nur im vollständig geschlossenen Zustand des Gehäuses der Gefahrenmelderzentrale in seiner ersten Schaltkonfiguration betätigt ist.

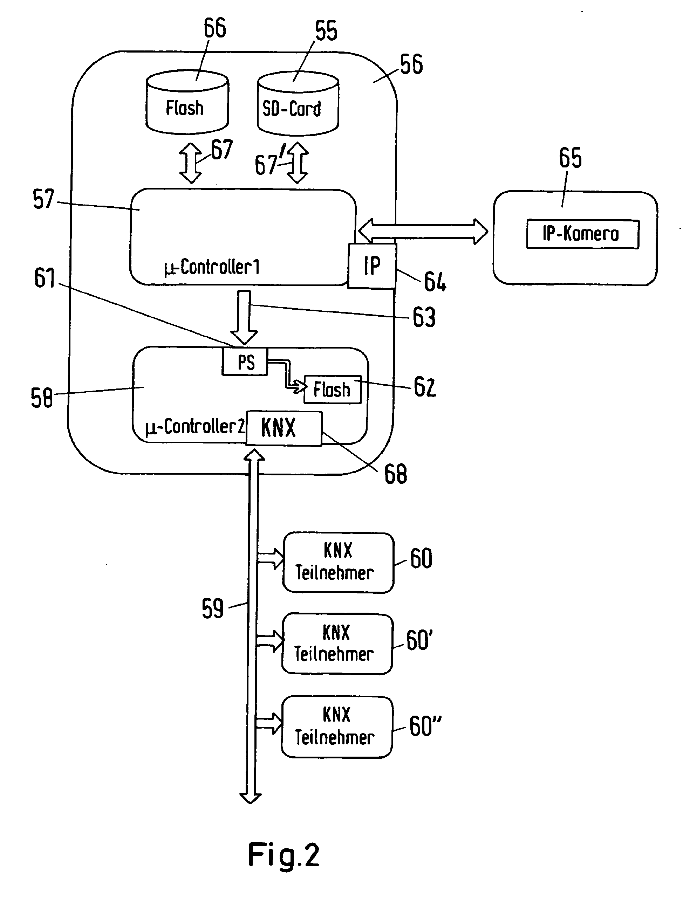

Die Elektronikeinheit 27 hat eine Speicherkarten-Schreib/lesevorrichtung, 55, hier ein SD-Karten-Leser, siehe Figur 2, die auch auf der Grundleiterplatte angeordnet ist. An der Vorderseite der Elektronikabdeckung 40 ist dazu ein Schlitz 52 vorhanden, durch den die entsprechende Speicherkarte, hier eine SD-Speicherkarte, in die SD-Schreib/lese-vorrichtung eingesteckt und daraus entnommen werden kann. Der SD-Karten-Schlitz befindet sich unten mittig am Mittelteil der Elektronikabdeckung 40.

Die Elektronikeinheit 27 hat eine KNX-Busschnittstelleneinrichtung, die auch auf der Grundleiterplatte angeordnet ist, und zur Ankopplung der KNX-Zweidrahtleitungen hat die Elektronikeinheit eine KNX-Busankoppelvorrichtung in Form einer KNX-Busklemme 53. Diese ist an der Grundleiterplatte angebracht und durch eine entsprechende Ausnehmung in der Elektronikabdeckung 40 zugänglich. Sie ist rechts am unteren Randbereich 43 der Elektronikeinheit 27 angebracht. Mittels der KNX-Busklemme kann die Gefahrenmelderzentrale als ein Busteilnehmer in einem KNX-Gebäudebussystem eingebunden werden. Weiterhin sind an der Elektronikabdeckung eine Programmiertaste und eine Programmier-LED vorgesehen (nicht in den Figuren dargestellt), wie sie bei KNX-Busgeräten üblicherweise vorhanden sind, um die physikalische Busadresse des KNX-Busteilnehmers an dem KNX-Busteilnehmer selbst durch Einprogrammieren festzulegen.

An den äußeren Ecken der Grundplatte 2 sind Befestigungslöcher 54 vorgesehen, zur Befestigung der Gefahrenmelderzentrale an einer Wand, mittels Schrauben oder dergleichen ähnlicher Befestigungsmittel.

Die Elektronikeinheit ist mit einer Energieversorgungsvorrichtung (nicht in den Figuren dargestellt) ausgebildet, deren Ausgangsspannung vorgesehen ist zur Versorgung der Gefahrenmelderzentrale selbst und zur Versorgung des oder der an der Gefahrenmelderzentrale angeschlossenen, von der Gefahrenmelderzentrale örtlich abgesetzten Module, also beispielsweise der Bewegungsmelder, Brandmelder etc., mit elektrischer Energie.

Die Energieversorgungsvorrichtung ist mit einer Netzstromversorgung und mit Akkumulatoren zur Notstromversorgung bei Netzausfall ausgebildet. Wenn im Notstrombetrieb die Stromversorgung von den Akkumulatoren übernommen wird, entladen diese sich nach und nach, und deren Ausgangsspannung sinkt ab. Die angeschlossenen Module haben einen definierten Stromverbrauch und eine minimale Eingangsspannung, die nicht unterschritten werden darf. Eine elektronische Überwachung als Teil der Elektronikeinheit sorgt dafür, dass bei Unterschreiten einer festgelegten Entladeschlussspannung der Akkumulatoren, die etwa gleich der minimalen Versorgungsspannung der angeschlossenen Module ist, die Versorgung der Module eingestellt und ggf. eine (weitere) Alarmmeldung ausgegeben wird. So ist gewährleistet, dass die Module jeweils nur so lange aktiviert sind, wie durch Anliegen ihrer minimalen Versorgungsspannung ihre bestimmungsgemäße Funktion sichergestellt ist. Jedoch hat das Absinken der Ausgangsspannung der Akkumulatoren Konsequenzen für die zulässige Länge der Verbindungskabel zwischen der Gefahrenmelderzentrale und dem jeweils angeschlossenen Modul. Denn der Spannungsabfall auf der Versorgungsleitung bleibt bei gleichem Betriebsstrom des Moduls gleich und muss von der Akkumulatorspannung mit aufgebracht werden. Die Leitungslänge ist daher begrenzt. Eine Beispielrechnung soll das verdeutlichen.

In der Einbruchmeldetechnik wird üblicherweise eine Installationsleitung mit einem Aderdurchmesser von 0,6 oder 0,8mm verwendet. Bei einem Aderdurchmesser von 0,6mm beträgt der Schleifenwiderstand 130 Ohm/km. Bei einer angenommenen Stromstärke des Verbrauchers von 100mA und einer minimalen Betriebsspannung des Verbrauchers von 9V ergibt sich für den Fall, dass die Akkuspannung die Entladeschlussspannung 10,5V erreicht hat, ein maximaler Spannungsabfall auf der Leitung: von 10,5V - 9V = 1,5V. Der zugehörige Leitungswiderstand ermittelt sich zu R = 1,5V / 100mA = 15 Ohm. Damit ergibt sich eine maximal zulässige Leitungslänge von L = (15/130) km = 115m, also 57,5m für eine Hin- und Rückleitung.

Neu bei der erfindungsgemäßen Gefahrenmelderzentrale gemäß der hier beschriebenen Ausführung ist, dass, eine Spannungsstabilisierungsschaltung zur Stabilisierung der Ausgangsspannung auch bei Nachlassen oder Absinken der Netzspannung vorhanden ist.

Beispielsweise kann die Ausgangsspannung durch ein stabilisiertes Schaltnetzteil auf einen Wert stabilisiert sein, der größer ist als die minimale Betriebsspannung der angeschlossenen Verbraucher beziehungsweise Module, beispielsweise auf einen wert von 13,2 V, auch im Akkumulatorenbetrieb bei Ausfall der Netzspannung. Dadurch ist eine definierte Ausgangsspannung auch bei sich entladenden Akkus gewährleistet, wodurch größere Leitungslängen bei gleichem Leitungsquerschnitt möglich sind.

Im oben genannte Beispiel ergibt sich jetzt, also wenn die Akkumulatorspannung bei 13,2V stabilisiert bleibt, folgendes. Der maximale Spannungsabfall auf der Leitung erhöht sich auf: 13,2V - 9V = 4,2V. Der zugehörige Leitungswiderstand erhöht sich auf R = 4,2 V / 100mA = 42 Ohm. Die maximale Leitungslänge verlängert sich dadurch auf L = (42/130) km = 323m, das sind 161,5m für eine Hin- und Rückleitung, mithin also nahezu dreimal so lang wie bei unstabilisierter Akkumulatorspannung. Um eine vergleichbare Leitungslänge mit unstabilisierter Akkumulatorspannung gemäß dem Stand der Technik zu erreichen müsste ein dickeres Kabel mit einem Durchmesser von 1,23mm verwendet werden.

Erfindungsgemäß ist in vorteilhafter Ausführungsform damit ein komplettes Weitbereichsnetzteil auf der Grundleiterplatte integriert. Es ist damit keine Verdrahtung zu der Elektronik von einem separaten Netzteil aus erforderlich.

Die Figur 2 zeigt ein Blockschaltbild des informationsbezogenen Teils der elektronischen Schaltung, wie sie auf der Grundleiterplatte implementiert ist. Die Energieversorgungsvorrichtung und die Akkumulatoren sowie die Spannungsstabilisierung sind nicht dargestellt.

Die Elektronik umfasst ein erstes Modul 57 mit einem erstem Mikroprozessor und einem integrierten Web User Interface (nicht in der Figur dargestellt, angedeutet durch die IP-Schnittstelle 64). Die Elektronik umfasst weiter ein zweites Modul 58 mit einem zweitem Mikroprozessor und der KNX-Busschnittstelleneinrichtung 68. An die KNX-Busschnittstelleneinrichtung 68 wird an der oben erwähnten KNX-Busklemme 53 die KNX-Busleitung 59 angeschlossen, über die die Gefahrenmelderzentrale mit weiteren KNX-Busteilnehmern 60, 60', 60" in Verbindung steht.

Das zweite Modul 58 hat eine Programmierschnittstelle 61, über die dem zweiten Modul die KNX-Firmware übermittelt werden kann. Die KNX-Firmware ist innerhalb des zweiten Moduls 58 in einem Flash-Speicher 62 gespeichert, einem Schreib-Lesespeicher.

Intern ist die Programmierschnittstelle 61 des zweiten Moduls 58 über eine interne Busleitung 63 mit dem ersten Modul verbunden. Intern kann somit ein Update der KNX-Firmware über den ersten Mikroprozessor des ersten Moduls 57 erfolgen.

Die erfindungsgemäße Gefahrenmelderzentrale ist somit erfindungsgemäß und in besonders vorteilhafter Ausführung mit einer integrierten KNX-Schnittstelle versehen, die nach den Normen EN 50491 (für KNX-Geräte), EN50131 Grad 3 und VdS-Klasse C (für Einbruch- und Oberfallmeldeanlagen) gestaltet ist und diese erfüllt. Daher ist kein zusätzliches Gerät und keine zusätzliche Verdrahtung erforderlich, es wird in einem einzigen kompakten Gerät sowohl die Norm der Einbruch- und Überfallmeldeanlagen als auch die Norm für KNX Systeme erfüllt.

Das erste Modul hat eine Kommunikationsschnittstelle 64, als IP-Schniftstelle bezeichnet, wobei IP für das Internet Protocol steht, über die die Anbindung der Gefahrenmelderzentrale an das LAN (Local Area Network) und WLAN (Wireless Local Area Network) erfolgen kann. Im Beispiel der Figur 2 ist eine Netzwerkkamera 65, auch als Web-Kamera 65 oder als IP-Kamera bezeichnet, an die Gefahrenmelderzentrale angeschlossen.

Auf der Grundleiterplatte 56 ist auch ein Flash-Speicher 66 ausgebildet, der mit dem ersten Modul 57 über einen ersten internen Bus 67, einen Flash-Bus, verbunden ist. Auch die Speicherkarten -Schreib/Lesevorrichtung 55, hier auch kurz als SD-Kartenleser bezeichnet, ist mit dem ersten Modul 57 verbunden, und zwar über einen zweiten internen Bus 67', einen SD-Bus.

Die internen Busse 67 und 67' sowie die oben erwähnte interne Busleitung 63 können auch als ein einziger interner Gerätebus ausgebildet sein.

Die Speicherkarten -Schreib/Lesevorrichtung 55 eröffnet die Möglichkeit, auf besonders einfache Art und Weise ein Update der KNX-Firmware der Gefahrenmelderzentrale durchzuführen. Die neue, das Update beinhaltende KNX-Firmware wird auf einer SD-Speicherkarte gespeichert, diese wird in den SD-Kartenleser eingeführt, und von der SD-Karte gelangt die aktualisierte KNX-Firmware über den internen Bus 67, das erste Modul 57 mit dem ersten Mikroprozessor, den internen Bus 63, die Programmierschnittstelle 61 in den Flash-Speicher 62 des zweiten Moduls 58, von hier aus erfolgt die Installation der aktualisierten KNX-Firmware.

Bisher war zur Aktualisierung der KNX-Firmware ein externer Computer, meistens ein Personalcomputer, mit einer speziellen Parametrier-Software erforderlich.

Das integrierte Web-Interface ermöglicht eine Reihe von vorteilhaften Benutzungseigenschaften der erfindungsgemäßen Gefahrenmelderzentrale.

So können durch die Speicherkarten -Schreib/Lesevorrichtung 55 Bilder von Netzwerkkameras, Produktdokumentationen und sonstige Dokumente, die dem ersten Modul 57 über die IP-Schnittstelle 64 übermittelt werden, auf einer Speicherkarte gespeichert werden.

Sprachmeldungen müssen nicht über Wave-Dateien geladen werden, sondern werden aus Textdateien, die über das integrierte Web User Interface individuell erstellt werden können, in Sprachmeldungen umgewandelt.

In dem Web User Interface können automatisierte Servicefunktionen und automatisierte Diagnosefunktionen integriert sein, wodurch die Wartungsarbeiten und die Fehlersuche vereinfacht sind.

Die Parameter der Busteilnehmer, zum Beispiels der Busbewegungsmelder, können einzeln durch das integrierte Web User Interface bearbeitet und in die Teilnehmer übertragen werden. Bisher war im Stand der Technik hierzu eine spezielle Parametrierungssoftware erforderlich.

Alle Ausgänge haben eine Strombegrenzung, d.h. es sind keine Feinsicherungen notwendig, die nach einem Kurzschluss oder Überlast gewechselt werden müssen. Die Strombegrenzung ist variabel ausgelegt und kann über das Web User Interface eingestellt werden.

**Bezugszeichenliste**

| | | | |
|---|---|---|---|
| 1 | geöffnetes Wandgehäuse | 34 | Stift |
| 2 | Grundplatte | 35 | Stift |
| 3 | Bodenplatte | 36 | Stift |
| 4 | Rechte Längsseitenwand | 37 | Stift |
| 5 | Obere Seitenwand | 38 | Aufnahmetasche |
| 6 | Untere Seitenwand | 39 | Aufnahmetasche |
| 7 | Linke Längsseitenwand | 40 | Elektronik-Abdeckung |
| 8 | Obere Kabelöffnung | 41 | Mittelteil |
| 9 | Obere Kabelöffnung | 42 | Oberer Randbereich |
| 10 | Obere Kabelöffnung | 43 | Unterer Randbereich |
| 11 | Lasche | 44 | Seitlicher Randbereich |
| 12 | Lasche | 45 | Kabelanschlussklemme |
| 13 | Lasche | 46 | Beschriftungsfläche |
| 14 | Mittlere Kabelöffnung | 47 | Gehäuseabdeckungsabhebekontaktgeber |
| 15 | Mittlere Kabelöffnung | | |
| 16 | Lasche | 48 | Betätigungsmittel für den Gehäuseabdeckungsabhebekontaktgeber, Steg |
| 17 | Lasche | | |
| 18 | Weitere Öffnung | 49 | Längsschenkel |
| 19 | Lasche | 50 | Längsschenkel |
| 20 | Wandabhebekontaktgeber | 51 | Betätigungsfläche |
| 21 | Gehäuse | 52 | Schlitz |
| 22 | Betätigungshebel | 53 | KNX-Busklemme |
| 23 | Anschlussstifte | 54 | Befestigungsloch |
| 24 | Schiene | 55 | SD-Karten-Leser |
| 25 | Flügelschraube | 56 | Grundleiterplatte |
| 26 | Langloch | 57 | Erstes Modul |
| 27 | Elektronik-Einheit | 58 | Zweites Modul |
| 28 | Gehäuseabdeckung | 59 | KNX-Busleitung |
| 29 | Aufnahmeöffnung | 60 | KNX-Busteilnehmer |
| 30 | Aufnahmeöffnung | 60' | KNX-Busteilnehmer |
| 31 | Aufnahmeöffnung | 60" | KNX-Busteilnehmer |
| 32 | Längsseitenwand | 61 | Programmierschnittstelle |
| 33 | Längsseitenwand | 62 | Flash-Speicher |
| 63 | Interne Busleitung | 67 | Interner Bus |
| 64 | IP-Schnittstelle | 68 | KNX-Busschnittstelleneinrichtung |
| 65 | Netzwerkkamera | | |
| 66 | Flash-Speicher | | |

## Patentansprüche

1. Gefahrenmelderzentrale mit einer Gehäuseabdeckung (28), mit einem Wandgehäuse (1), welches ausgebildet ist mit einer Grundplatte (2), mit einer eine Grundleiterplatte (56) umfassenden Elektronikeinheit (27), die an der Grundplatte (2) befestigt ist,
**dadurch gekennzeichnet, dass** die Elektronikeinheit (27) eine Elektronikabdeckung (40) aufweist, die die Grundleiterplatte (56) sowohl vorder- als auch rückseitig abdeckt, und dass die der Grundplatte (2) zugewandte Seite der Elektronikabdeckung (40) von der Grundplatte (2) beabstandet ist, so dass ein freier Raum zum Durchführen von Kabeln zwischen der Grundplatte (2) und der Elektronikabdeckung (40) gebildet ist.

2. Gefahrenmelderzentrale nach Anspruch 1, **dadurch gekennzeichnet, dass** in der Elektronikeinheit (27) ein durch die Elektronikabdeckung (40) hindurch betätigbarer Gehäuseabdeckungsabhebekontaktgeber (47) eingebaut ist, und dass an der Gehäuseabdeckung (28) ein Betätigungsmittel (48) vorgesehen ist, wobei der Gehäuseabdeckungsabhebekontaktgeber (47) unterhalb der Gehäuseabdeckung (28) in dem Wirkbereich des Betätigungsmittels (48) angeordnet ist, so dass bei vollständig aufgesetzter Gehäuseabdeckung (28) der Gehäuseabdeckungsabhebekontaktgeber (47) betätigt ist.

3. Gefahrenmelderzentrale nach Anspruch 1, **dadurch gekennzeichnet, dass** sie mit einem Wandabhebekontaktgeber (20) versehen ist, und dass die Grundplatte (2) mit einer für eine veränderliche Einstellung des Abstandes zwischen der Grundplatte (2) und dem Wandabhebekontaktgeber (20) eingerichteten Halterungsvorrichtung für den Wandabhebekontaktgeber (20) ausgebildet ist, wobei der Wandabhebekontaktgeber (20) an der Halterungsvorrichtung längsverschieblich in Richtung zwischen der Grundplatte (2) und der Wand gehalten ist.

4. Gefahrenmelderzentrale nach Anspruch 3, **dadurch gekennzeichnet, dass** die Halterungsvorrichtung für den Wandabhebekontaktgeber (20) durch eine durch Schlitze in der Grundplatte (2) gebildete und senkrecht zur Grundplatte (2) umgebogene Lasche (19) und eine auf der Lasche (19) senkrecht zur Grundplatte (2) verschiebliche und an der Lasche (19) befestigbare Schiene (24) gebildet ist, an deren freiem Ende der Wandabhebekontaktgeber (20) befestigbar ist.

5. Gefahrenmelderzentrale nach Anspruch 1, **dadurch gekennzeichnet, dass** die Elektronikeinheit (27) mit einer auf der Grundleiterplatte (56) ausgebildeten KNX-Busschnittstelleneinrichtung (68) und einer KNX-Busklemme (53) versehen ist.

6. Gefahrenmelderzentrale nach Anspruch 5, **dadurch gekennzeichnet, dass** die Elektronikeinheit (27) mit einem Web-Server und einem Web-User-Interface ausgebildet ist.

7. Gefahrenmelderzentrale nach Anspruch 6, **dadurch gekennzeichnet, dass** die Elektronikeinheit (27) mit einer Speicherkarten-Schreib/lesevorrichtung (55) ausgebildet ist.

8. Gefahrenmelderzentrale nach Anspruch 7, **dadurch gekennzeichnet, dass** die Elektronikeinheit (27) mit wenigstens einem Mikroprozessor ausgebildet ist.

9. Gefahrenmelderzentrale nach Anspruch 1, **dadurch gekennzeichnet, dass** die Elektronikeinheit (27) mit einer Energieversorgungsvorrichtung ausgebildet ist, deren Ausgangsspannung vorgesehen ist zur Versorgung der Gefahrenmelderzentrale selbst und zur Versorgung von wenigstens einem an die Gefahrenmelderzentrale angeschlossenen, von der Gefahrenmelderzentrale örtlich abgesetzten Modul mit elektrischer Energie, wobei die Energieversorgungsvorrichtung ausgebildet ist mit einer Netzstromversorgung und mit Akkumulatoren zur Notstromversorgung bei Netzausfall und mit einer Spannungsstabilisierungsschaltung zur Stabilisierung der Ausgangsspannung auch bei Nachlassen der Akkumulatorspannung.

10. Gefahrenmelderzentrale nach Anspruch 1, **dadurch gekennzeichnet, dass** die Elektronikeinheit (27) mit Anschlussklemmen versehene Ausgänge zum Anschluss von Verbindungskabeln zu dem wenigstens einen von der Gefahrenmelderzentrale örtlich abgesetzten Modul aufweist.

11. Gefahrenmelderzentrale nach Anspruch 10, **dadurch gekennzeichnet, dass** die Ausgänge mit einer Strombegrenzung versehen sind.

12. Gefahrenmelderzentrale nach Anspruch 11, **dadurch gekennzeichnet, dass** die Strombegrenzung variabel ausgelegt und über ein Web User Interface einstellbar ist.

13. Gefahrenmelderzentrale nach Anspruch 12, **dadurch gekennzeichnet, dass** der maximale Ausgangsstrom der einzelnen Ausgänge variabel über das Web User Interface einstellbar ist, wobei die Verteilung der Stromstärken auf die einzelnen Ausgänge in Abhängigkeit eines maximal verfügbaren Stromes erfolgt.

## Claims

1. Security panel having a housing cover (28), having a wall housing (1) which is formed with a base plate (2), having an electronics unit (27) which comprises a main printed circuit board (56) and which is fastened to the base plate (2),
**characterized in that** the electronics unit (27) has an electronics cover (40) which covers the main printed circuit board (56) both at the front and at the rear, and **in that** that side of the electronics cover (40) which faces the base plate (2) is a distance from the base plate (2), so that a free space for routing cables is formed between the base plate (2) and the electronic cover (40).

2. Security panel according to Claim 1, **characterized in that** a housing cover removal contact transmitter (47), which can be operated through the electronics cover (40), is installed in the electronics unit (27), and **in that** an operating means (48) is provided on the housing cover (28), wherein the housing cover removal contact transmitter (47) is arranged beneath the housing cover (28) in the active region of the operating means (48), so that the housing cover removal contact transmitter (47) is operated when the housing cover (28) is fully fitted.

3. Security panel according to Claim 1, **characterized in that** it is provided with a wall removal contact
transmitter (20), and **in that** the base plate (2) is formed with a holder apparatus for the wall removal contact transmitter (20), which holder apparatus is designed for variably adjusting the distance between the base plate (2) and the wall removal contact transmitter (20), wherein the wall removal contact transmitter (20) is held on the holder apparatus such that it can be longitudinally displaced in the direction between the base plate (2) and the wall.

4. Security panel according to Claim 3, **characterized in that** the holder apparatus for the wall removal contact transmitter (20) is formed by a tab (19), which is formed by slots in the base plate (2) and which is bent perpendicular to the base plate (2), and a rail (24), which can be displaced on the tab (19) perpendicular to the base plate (2) and can be fastened to the tab (19), it being possible for the wall removal contact transmitter (20) to be fastened to the free end of the said rail.

5. Security panel according to Claim 1, **characterized in that** the electronics unit (27) is provided with a KNX bus interface device (68), which is formed on the main printed circuit board (56), and a KNX bus terminal (53).

6. Security panel according to Claim 5, **characterized in that** the electronics unit (27) is formed with a web server and a web user interface.

7. Security panel according to Claim 6, **characterized in that** the electronics unit (27) is formed with a memory card read/write apparatus (55).

8. Security panel according to Claim 7, **characterized in that** the electronics unit (27) is formed with at least one microprocessor.

9. Security panel according to Claim 1, **characterized in that** the electronics unit (27) is formed with a power supply apparatus, the output voltage of the said power supply apparatus being provided for supplying electrical energy to the security panel itself and for supplying electrical energy to at least one module which is connected to the security panel and is physically separate from the security panel, wherein the power supply apparatus is formed with a mains power supply and with rechargeable batteries for emergency power supply in the event of a power cut and with a voltage-stabilization circuit for stabilizing the output voltage even when the rechargeable battery voltage drops.

10. Security panel according to Claim 1, **characterized in that** the electronics unit (27) has outputs, which are provided with connection terminals, for connecting connecting cables to the at least one module which is physically separate from the security panel.

11. Security panel according to Claim 10, **characterized in that** the outputs are provided with current limiting.

12. Security panel according to Claim 11, **characterized in that** the current limiting is variable and can be adjusted by means of a web user interface.

13. Security panel according to Claim 12, **characterized in that** the maximum output current of the individual outputs can be variably adjusted by means of the web user interface, wherein the current intensities are distributed between the individual outputs depending on a maximum available current.

## Revendications

1. Centrale de signalisation de danger présentant un couvercle (28) de boîtier, un boîtier mural (1) configuré avec une plaque de base (2) et une unité électronique (27) comprenant une carte de circuit de base (56) fixée sur la plaque de base (2),
**caractérisée en ce que**
l'unité électronique (27) présente un couvercle (40) d'électronique qui recouvre la carte de circuit de base (56) à la fois sur son côté avant et sur son côté arrière et
**en ce que** le côté du couvercle (40) d'électronique tourné vers la plaque de base (2) est maintenu à distance de la plaque de base (2) de manière à former un espace libre permettant le passage de câbles entre la plaque de base (2) et le couvercle (40) de l'électronique.

2. Centrale de signalisation de danger selon la revendication 1, **caractérisée en ce qu'**un contacteur (47) d'enlèvement du couvercle de boîtier apte à être actionné à travers le couvercle (40) de l'électronique est monté dans l'unité électronique (27) et **en ce qu'**un moyen d'actionnement (48) est prévu sur le couvercle (28) du boîtier, le contacteur (47) d'enlèvement du couvercle de boîtier étant disposé en dessous du couvercle (28) du boîtier dans la zone d'action du moyen d'actionnement (48) de telle sorte que le contacteur (47) d'enlèvement de couvercle de boîtier soit actionné lorsque le couvercle (28) de boîtier est complètement placé.

3. Centrale de signalisation de danger selon la revendication 1, **caractérisée en ce qu'**elle est dotée d'un contacteur (20) d'enlèvement mural et **en ce que** la plaque de base (2) est configurée avec un dispositif de maintien du contacteur (20) d'enlèvement mural pour permettre de modifier la distance entre la plaque de base (2) et le contacteur (20) d'enlèvement mural, le contacteur (20) d'enlèvement mural étant maintenu sur le dispositif de maintien de manière à coulisser longitudinalement dans la direction allant entre la plaque de base (2) et le mur.

4. Centrale de signalisation de danger selon la revendication 3, **caractérisée en ce que** le dispositif de maintien prévu pour le contacteur (20) d'enlèvement mural est formé par une patte (19) rabattue perpendiculairement à la plaque de base (2) et formée de fentes ménagées dans la plaque de base (2) et par un rail (24) apte à coulisser sur la patte (19) perpendiculairement à la plaque de base (2), à être fixé sur la patte (19) et à l'extrémité libre duquel le contacteur (20) d'enlèvement du mur peut être fixé.

5. Centrale de signalisation de danger selon la revendication 1, **caractérisée en ce que** l'unité électronique (27) est dotée d'un dispositif (68) d'interface KNX formé sur la carte de circuit de base (56) et d'une borne de bus KNX (53).

6. Centrale de signalisation de danger selon la revendication 5, **caractérisée en ce que** l'unité électronique (27) est configurée avec un serveur web et une interface de serveur web.

7. Centrale de signalisation de danger selon la revendication , 6, **caractérisée en ce que** l'unité électronique (27) est configurée avec un dispositif (55) de lecture/écriture sur une carte de mémoire.

8. Centrale de signalisation de danger selon la revendication 7, **caractérisée en ce que** l'unité électronique (27) est configurée avec au moins un microprocesseur.

9. Centrale de signalisation de danger selon la revendication 1, **caractérisée en ce que** l'unité électronique (27) est configurée avec un dispositif d'alimentation en énergie dont la tension de sortie est prévue pour alimenter en énergie électrique la centrale de signalisation de danger proprement dite et pour alimenter en énergie au moins un module raccordé à la centrale de signalisation de danger mais distant spatialement de la centrale de signalisation de danger, le dispositif d'alimentation en énergie étant configuré avec une alimentation par courant du réseau, des accumulateurs d'alimentation en courant de secours en cas de défaillance du réseau et un circuit de stabilisation de tension qui stabilise la tension de sortie même lorsque la tension d'accumulateur faiblit.

10. Centrale de signalisation de danger selon la revendication 1, **caractérisée en ce que** l'unité électronique (27) présente des sorties dotées de bornes de raccordement qui permettent le raccordement de câbles de liaison vers le ou les modules séparés spatialement de la centrale de signalisation de danger.

11. Centrale de signalisation de danger selon la revendication 10, **caractérisée en ce que** les sorties sont dotées d'une limitation du courant.

12. Centrale de signalisation de danger selon la revendication 11, **caractérisée en ce que** la limitation du courant peut être modifiée et réglée par l'intermédiaire d'une interface web d'utilisateur.

13. Centrale de signalisation de danger selon la revendication 12, **caractérisée en ce que** le courant maximum de sortie des différentes sorties peut être modifié par l'intermédiaire de l'interface web d'utilisateur, la répartition des intensités du courant sur les différentes sorties dépendant du courant maximum disponible.
